# EUROPEAN PATENT APPLICATION

(11) **EP 2 613 234 A1**
(43) Date of publication of application: **10.07.2013**
(21) Application number: 13157662.1
(22) Date of filing: 25.05.2009
(51) Int. Cl.: G06F 3/041, G06F 1/16, G06F 3/0488, H04M 1/02

(54) **User interface, device and method for a physically flexible device**

(30) Priority: 10.07.2008 US 170762
(62) Divisional of application: 09793986.2
(71) Applicant: Nokia Corporation, 02150 Espoo (FI)
(72) Inventor: Nurmi, Mikko, FI-33500 Tampere (FI)
(74) Representative: Khan, Mohammed Saiful Azam

(57) **Abstract**

There is disclosed an apparatus configured to, detect one or more bends in a user interface comprising a flexible display; determine a shape resulting from the one or more detected bends, the shape being a letter shape associated with the function; and execute said function associated with the letter shape. There is also disclosed an apparatus configured to detect one or more bends in a user interface comprising a flexible display; determine a shape resulting from the one or more detected bends; and execute said function associated with the shape, the function being searching for a location associated with the shape. There is further disclosed an apparatus configured to detect one or more bends in a user interface comprising a flexible display; determine a shape resulting from the one or more detected bends; and execute said function associated with the shape, wherein a phone-like shape is associated with the function of answering a call.

## Description

### FIELD

The present application relates to a user interface, a device and a method for an improved user interaction, and in particular to a user interface, a device and a method for an improved user interaction through the use of a flexible display.

### BACKGROUND

In recent years, considerable progress has been made towards the development of thin and flexible displays. For example, it is known to have a display device assembly comprising a flexible display device being rollable around an axis. A range of flexible electronic devices based on these technologies, including full color, high-resolution flexible organic light emitting diode, OLED, displays with a thickness of 0.2 mm are being introduced to the market. The goal of such efforts is to provide displays with superior handling, contrast and flexibility.

It should be noted that the category of displays to which these disclosed embodiments pertain are very different from the type of rigid-surface Liquid Crystal Display (LCD) displays which can be rotated around their respective axes but not deformed.

Prior art demonstrates the value of incorporating the deformation of computing objects for use as input for computer processes. However, in this document, we propose methods for interacting with flexible displays that rely on deformations of the surface structure of the display itself.

Another prior art discloses a credit card sized computer that uses physical deformation of the device for browsing of visual information, it should be noted that said device did not incorporate a flexible material, and did not use deformation of the display. Instead, it relied on the use of touch sensors mounted on a rigid LCD-style display body.

It is also known to have a sort of digital desk which is a physical desk augmented with electronic input and display. A computer controlled camera and projector are positioned above the desk. Image processing is used to determine which page a user is pointing at. Object character recognition transfers content between real paper and electronic documents projected on the desk. This system blurs the boundaries between the digital and physical world by taking a printed number and transferring it into an electronic calculator.

It is also known to use normal paper as displays and control means.

It is further known to use a set of interaction techniques for obtaining input to a computer system based on methods and apparatus for detecting properties of the shape, location and orientation of flexible display surfaces, as determined through manual or gestural interactions of a user with said display surfaces. Such input may be used to alter graphical content and functionality displayed on said surfaces or some other display or computing system. In this system a camera is used to detect the position and shape of a paper.

The use of a camera to detect the position of a screen and/or a user's hands suffers from the drawback that the system is not mobile and requires that the camera is fixed and steady or the image processing becomes very difficult to achieve correctly. Also, as the camera needs to be placed some distance away from the display that it detects the shape and position of the system becomes cumbersome.

Also a paper system having multiple papers acting as screens suffers from the disadvantage that the whole setup is vulnerable and sensitive to outer influences such as wind or involuntary movement of a paper/display.

One prior art solution wherein a flexible display is used to give simple commands similar to a single keypress is known where a bend of the screen activates a pre-specified action. In such a solution the proposed UI is limited to simple actions such as scroll or zoom and will not be sufficient to satisfy all requirements of a modem device being capable of executing a plurality of differing applications.

Thus a user interface and a device incorporating such user interface having a flexible screen capable of being small and mobile while still allowing several user actions to be taken is desirable.

### SUMMARY

On this background, it would be advantageously to provide a user interface, a device and a method that overcomes or at least reduces the drawbacks indicated above by providing a flexible user interface.

The disclosed embodiments provide a user interface comprising a flexible display and a controller configured to detect a first bend and determine a resulting first foldline, determine a graphical object being intersected by said first foldline and execute a function associated with said graphical object.

This allows a user to select an item without moving his hands and without requiring additional keys or external hardware.

In one embodiment the display is configured to display the graphical object.

In one embodiment the controller is further configured to detect a second bend and determine a resulting second foldline, determine a second graphical object being intersected by said second foldline and wherein said function is associated with or performed on said second graphical object.

In one embodiment the controller is further configured to determine a second graphical object being intersected by said first foldline and wherein said function is associated with or executed on said second graphical object.

In one embodiment the controller is further configured to detect a variation in said first bend and determine a resulting second foldline and determine a second graphical object being intersected by said second foldline and wherein said function is associated with or executed on said second graphical object.

In one embodiment the controller is further configured to detect a third graphical object being intersected by said first foldline and wherein said function is associated with or executed on said third graphical object.

These embodiments allow a user to combine several items in one function. For example, it allows for combining one item representing an operation with one or more items representing operands.

In one embodiment the display is a touchdisplay and said controller is further configured to detect a touch input identifying a graphical object on said display wherein said function is associated with or executed on said second graphical object.

This allows a user to combine touch input with bending input which increases the number of possible commands. Also, by arranging the touch items close to the edge of the touchdisplay the user won't be required to move his hands during operation of the user interface.

In one embodiment the display is configured to display a graphical indication of a foldline. This provides a user with visual feedback and allows for a more precise control of the bending input and the selected items.

In one embodiment the controller is further configured to detect a double bend. This increases the number of available command options.

In one embodiment the controller is further configured to detect a release event and execute said function upon detection of said release event. This provides increased control as a foldline may be varied to a wanted position before the associated function is executed.

In one embodiment an informative text or icon is displayed while a foldline intersects a graphical object. This informs a user of which associated function will be executed should that object be selected.

In one embodiment the controller is further configured to detect a characteristic of said bend and determine said associated function according to said a criterion based on said characteristic. In one embodiment the criterion is related to one characteristic taken from the group comprising: position of bend, angle of bend, speed of bend, sharpness of bend.

This provides for an increased number of different command options available in the user interface.

In one embodiment the controller is further configured to determine that a graphical object is intersected if a foldline intersects an area surrounding said graphical object. This provides for a faster input as a foldline does not have to intersect the graphical object precisely.

The aspects of the disclosed embodiments are also directed to providing a user interface comprising a flexible display and a controller configured to detect a bend resulting in a shape and execute a function associated with said shape. This provides for a fast and intuitive manner of executing a pre-specified function as a shape is easy to remember and is strongly associated to everyday real-life objects and actions.

In one embodiment the controller is further configured to detect a movement and execute a function associated with said movement. This increases the number of available command options and also further increases the intuitive coupling between the function and the resembling everyday real-life object or action.

In one embodiment the function is to search for an institution and in one embodiment the function is to establish a connection with a device.

The aspects of the disclosed embodiments are also directed to providing a user interface comprising a flexible display and a controller configured to detect a bend of a corner of said display and execute a function associated with said corner. This provides a fast and intuitive manner of executing a command or function.

In one embodiment only the corners of the display are bendable and by only bending the corners a device incorporating such a user interface can be made of cheaper and more common material and also be made more rigid.

The aspects of the disclosed embodiments are also directed to providing a user interface comprising flexible display means and control means for detecting a first bend and determining a resulting first foldline, determining a graphical object being intersected by said first foldline and executing a function associated with said graphical object.

The user interface and the embodiments below share the advantages as discussed above.

In one embodiment the user interface further comprises control means for detecting a second bend and determining a resulting second foldline, determining a second graphical object being intersected by said second foldline and wherein said function is associated with or performed on said second graphical object.

In one embodiment the user interface further comprises control means for determining a second graphical object being intersected by said first foldline and wherein said function is associated with or executed on said second graphical object.

In one embodiment the user interface further comprises control means for detecting a variation in said first bend and determining a resulting second foldline and determining a second graphical object being intersected by said second foldline and wherein said function is associated with or executed on said second graphical object.

In one embodiment the user interface further comprises control means for detecting a third graphical object being intersected by said first foldline and wherein said function is associated with or executed on said third graphical object.

In one embodiment the display is a touchdisplay and the user interface further comprises control means for detecting a touch input identifying a graphical object on said display wherein said function is associated with or executed on said second graphical object.

In one embodiment the user interface further comprises display means for displaying a graphical indication of a foldline.

In one embodiment the user interface further comprises control means for detecting a double bend.

In one embodiment the user interface further comprises control means for detecting a release event and executing said function upon detection of said release event.

In one embodiment the user interface further comprises control means for detecting a characteristic of said bend and determining said associated function according to said a criterion based on said characteristic.

In one embodiment the criterion is related to one characteristic taken from the group comprising: position of bend, angle of bend, speed of bend, sharpness of bend.

In one embodiment the user interface further comprises control means for determining that a graphical objected is intersected if a foldline intersects an area surrounding said graphical object.

In one embodiment the user interface further comprises display means for displaying a graphical object.

The aspects of the disclosed embodiments are also directed to providing a user interface comprising flexible display means and control means for detecting a bend resulting in a shape and executing a function associated with said shape.

The user interface and the embodiments below share the advantages as discussed above.

In one embodiment the user interface further comprises control means for detecting a movement and executing a function associated with said movement. In one embodiment the function is to search for an institution. In one embodiment the function is to establish a connection with a device.

The aspects of the disclosed embodiments are also directed to providing a user interface comprising flexible display means and control means for detecting a bend of a corner of said display and executing a function associated with said corner. The user interface shares the advantages as discussed above.

The aspects of the disclosed embodiments are also directed to providing a device incorporating or configured to incorporate a user interface according to above.

The device shares the advantages as discussed above.

The aspects of the disclosed embodiments are also directed to providing a method for executing a function in a device comprising a flexible display, said method comprising detecting a bend, determine a resulting foldline and determine a graphical object intersected by said foldline and execute a function associated with said graphical object.

The method and the embodiments below share the advantages as discussed above.

In one embodiment the graphical object is displayed on the display.

In one embodiment the method further comprises detecting a release event and executing said function upon said release event.

In one embodiment the method further comprises determining said function based on a criterion related to a characteristic of said bend.

In one embodiment the method further comprises detecting a second bend, determining a resulting second foldline, determine a second graphical object being intersected by said second foldline and wherein said function is associated with or executed on said second graphical object.

In one embodiment the method further comprises determining a second graphical object being intersected by said first foldline and wherein said function is associated with or executed on said second graphical object.

In one embodiment the method further comprises detecting a variation in said first bend and determining a resulting second foldline and determining a second graphical object being intersected by said second foldline and wherein said function is associated with or executed on said second graphical obj ect.

In one embodiment the method further comprises detecting a third graphical object being intersected by said first foldline and wherein said function is associated with or executed on said third graphical object.

In one embodiment the display is a touchdisplay and the method comprises detecting a touch input identifying a graphical object on said display wherein said function is associated with or executed on said second graphical object.

In one embodiment the method further comprises displaying a graphical indication of a foldline.

In one embodiment the method further comprises detecting a double bend.

In one embodiment the method further comprises detecting a release event and executing said function upon detection of said release event.

In one embodiment the method further comprises determining that a graphical objected is intersected if a foldline intersects an area surrounding said graphical object.

The aspects of the disclosed embodiments are also directed to providing a method for executing a function in a device comprising a flexible display, said method comprising detecting a bend of a corner of said display and executing a function associated with said corner.

The method shares the advantages as discussed above.

The aspects of the disclosed embodiments are also directed to providing a device implementing or configured to implement a method according above.

The device shares the advantages as discussed above.

The aspects of the disclosed embodiments are also directed to providing a method for executing a function in a device comprising a flexible device, said method comprising detecting a bend, determining a resulting shape, determining a function associated with said shape and executing said function.

The method and the embodiments below share the advantages as discussed above. In one embodiment the function is to search for an institution.

In one embodiment the function is to establish a connection with a device.

In one embodiment the method further comprises detecting a movement wherein said function is associated with said movement.

In one embodiment the method further comprises detecting a release event and thereupon arrest said execution of said function.

The aspects of the disclosed embodiments are also directed to providing a device implementing or configured to implement a method according above.

The device shares the advantages as discussed above.

The aspects of the disclosed embodiments are also directed to providing a computer readable medium including at least computer program code for controlling a user interface comprising a flexible display, said computer readable medium comprising software code configured to detect a first bend and determine a resulting first foldline, software code configured to determine a graphical object being intersected by said first foldline and software code configured to execute a function associated with said graphical object.

The computer readable medium and the embodiments below share the advantages as discussed above.

In one embodiment the computer readable medium further comprises software code configured to display the graphical object.

In one embodiment the computer readable medium further comprises software code configured to detect a second bend and determine a resulting second foldline, determine a second graphical object being intersected by said second foldline and wherein said function is associated with or performed on said second graphical object.

In one embodiment the computer readable medium further comprises software code configured to determine a second graphical object being intersected by said first foldline and wherein said function is associated with or executed on said second graphical object.

In one embodiment the computer readable medium further comprises software code configured to detect a variation in said first bend and determine a resulting second foldline and determine a second graphical object being intersected by said second foldline and wherein said function is associated with or executed on said second graphical object.

In one embodiment the computer readable medium further comprises software code configured to detect a third graphical object being intersected by said first foldline and wherein said function is associated with or executed on said third graphical object.

In one embodiment the computer readable medium further comprises software code configured to wherein said display is a touchdisplay and said controller is further configured to detect a touch input identifying a graphical object on said display wherein said function is associated with or executed on said second graphical object.

In one embodiment the computer readable medium further comprises software code configured to display a graphical indication of a foldline.

In one embodiment the computer readable medium further comprises software code configured to detect a double bend.

In one embodiment the computer readable medium further comprises software code configured to detect a release event and execute said function upon detection of said release event.

In one embodiment the computer readable medium further comprises software code configured to detect a characteristic of said bend and determine said associated function according to said a criterion based on said characteristic.

In one embodiment the criterion is related to one characteristic taken from the group comprising: position of bend, angle of bend, speed of bend, sharpness of bend.

In one embodiment the computer readable medium further comprises software code configured to determine that a graphical objected is intersected if a foldline intersects an area surrounding said graphical object.

The aspects of the disclosed embodiments are also directed to providing a computer readable medium including at least computer program code for controlling a user interface comprising a flexible display, said computer readable medium comprising software code configured to detect a bend resulting in a shape and execute a function associated with said shape.

In one embodiment the computer readable medium further comprises software code configured to detect a movement and execute a function associated with said movement.

The aspects of the disclosed embodiments are also directed to providing a computer readable medium including at least computer program code for controlling a user interface comprising a flexible display, said computer readable medium comprising software code configured to detect a bend of a corner of said display and execute a function associated with said corner.

The computer readable medium shares the advantages as discussed above.

The aspects of the disclosed embodiments are also directed to providing a device implementing or configured to implement a computer readable medium according above.

The device shares the advantages as discussed above.

In one embodiment any of the devices above is a mobile phone, a Personal Digital Assistant (PDA), a game console, a media player or a personal organizer.

Further objects, features, advantages and properties of device, method and computer readable medium according to the present application will become apparent from the detailed description.

### BRIEF DESCRIPTION OF THE DRAWINGS

In the following detailed portion of the present description, the teachings of the present application will be explained in more detail with reference to the example embodiments shown in the drawings, in which:
Fig. 1 is an overview of a telecommunications system in which a device according to the present application is used according to an embodiment,
Fig. 2 a and b are plane front views of a device according to an embodiment,
Fig. 3 is a block diagram illustrating the general architecture of a device of Fig. 2 in accordance with the present application,
Fig. 4a, b, c, d, e and f are plane front views of a device according to an embodiment,
Fig. 5a, b, c, d, e and f are schematic drawings illustrating a bending pattern according to an embodiment,
Fig. 6a, b, c and d are flow charts describing each a method according to an embodiment,
Fig. 7 a and b are front views of a device according to an embodiment,
Fig 8 is a flow chart describing a method according to an embodiment,
Fig 9 is a flow chart describing a method according to an embodiment,
Fig 10a, b and c are schematic drawings of a device according to an embodiment,
Fig 11 is a flow chart describing a method according to an embodiment, and
Fig. 12a, b, c and d are plane front views of a device according to an embodiment.

### DETAILED DESCRIPTION

In the following detailed description, the device, the method and the software product according to the teachings for this application in the form of a cellular/mobile phone will be described by the embodiments. It should be noted that although only a mobile phone is described the teachings of this application can also be used in any electronic device such as in portable electronic devices such as laptops, PDAs, mobile communication terminals, electronic books and notepads and other electronic devices offering access to information.

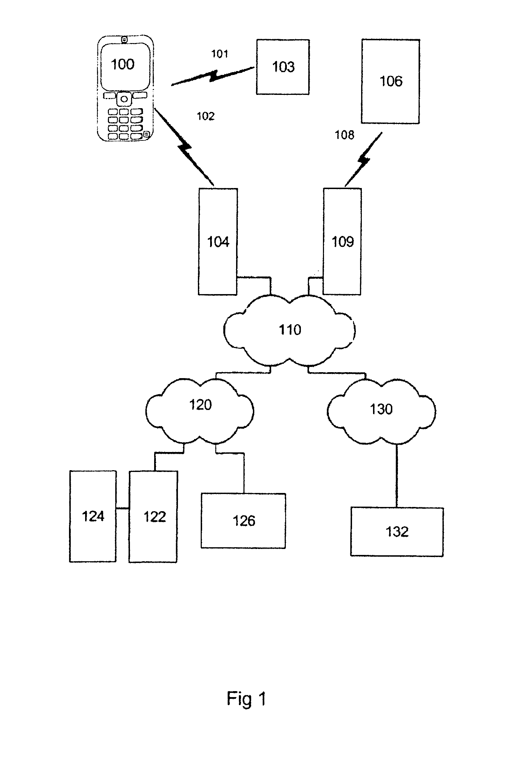

FIG. 1 illustrates an example of a cellular telecommunications system in which the teachings of the present application may be applied. In the telecommunication system of FIG. 1, various telecommunications services such as cellular voice calls, www or Wireless Application Protocol (WAP) browsing, cellular video calls, data calls, facsimile transmissions, music transmissions, still image transmissions, video transmissions, electronic message transmissions and electronic commerce may be performed between a mobile terminal 100 according to the teachings of the present application and other devices, such as another mobile terminal 106 or a stationary telephone 132. It is to be noted that for different embodiments of the mobile terminal 100 and in different situations, different ones of the telecommunications services referred to above may or may not be available; the teachings of the present application are not limited to any particular set of services in this respect.

The mobile terminals 100, 106 are connected to a mobile telecommunications network 110 through Radio Frequency, RF links 102, 108 via base stations 104, 109. The mobile telecommunications network 110 may be in compliance with any commercially available mobile telecommunications standard, such as Group Spéciale Mobile, GSM, Universal Mobile Telecommunications System, UMTS, Digital Advanced Mobile Phone system, D-AMPS, The code division multiple access standards CDMA and CDMA2000, Freedom Of Mobile Access, FOMA, and Time Division-Synchronous Code Division Multiple Access, TD-SCDMA.

The mobile telecommunications network 110 is operatively connected to a wide area network 120, which may be Internet or a part thereof. An Internet server 122 has a data storage 124 and is connected to the wide area network 120, as is an Internet client computer 126. The server 122 may host a www/wap server capable of serving www/wap content to the mobile terminal 100.

A public switched telephone network (PSTN) 130 is connected to the mobile telecommunications network 110 in a familiar manner. Various telephone terminals, including the stationary telephone 132, are connected to the PSTN 130. The mobile terminal 100 is also capable of communicating locally via a local link 101 to one or more local devices 103. The local link can be any type of link with a limited range, such as Bluetooth, a Universal Serial Bus (USB) link, a Wireless Universal Serial Bus (WUSB) link, an IEEE 802.11 wireless local area network link, a Radio Standard link for example an RS-232 serial link, etc. The local devices 103 can for example be various sensors that can communicate measurement values to the mobile terminal 100 over the local link 101.

It should be noted that although only a mobile communications terminal is described in detail herein it is to be seen as a mere example of a device having a user interface for accessing and controlling complex applications much like what is to be found in other devices such as Personal Digital Assistants, PDAs, media players, and other devices.

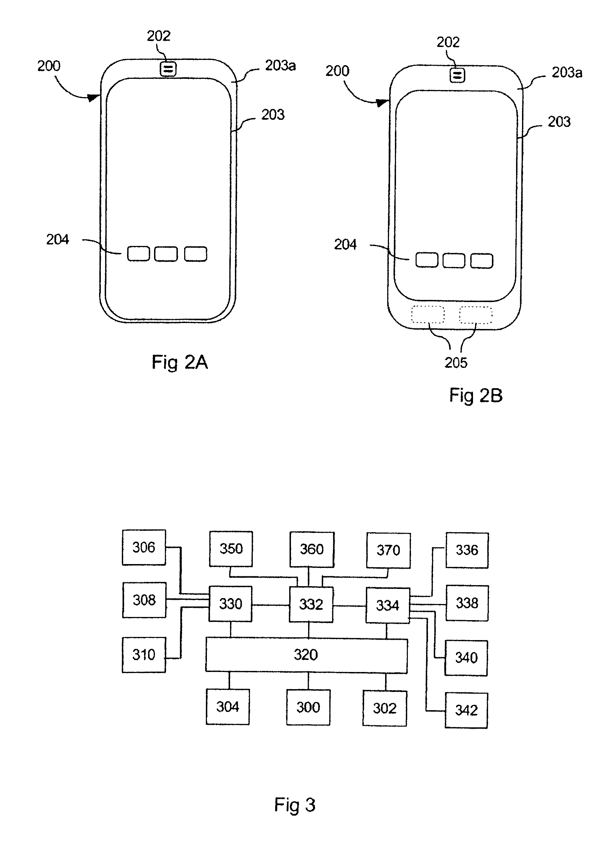

An embodiment 200 of the mobile terminal 100 is illustrated in more detail in FIG. 2A. The mobile terminal 200 comprises a speaker or earphone 202, a microphone 206 and a main or first display 203.

The display is made of OLEDs and such displays can be made very thin so that they are flexible. It is further known to add logic to flexible components which can be arranged or configured to detect the shape of the body they are connected to. For example, flex sensors may be used in combination with flexible displays. Flex sensors may for example be based on resistance, capacitance or impedance measurements and the sensors can detect deflection and/or force of the bend. Acceleration sensors may also be used for detecting the bend and/or movement. The sensors may be arranged addressable and the bend may be deduced. In the exemplary embodiment shown in fig 2A the display is shown as having a frame 203a. It should be noted that such a frame is not necessarily physically different from the display 203, but may be just a graphical indication of the touch screen area. In one embodiment the frame is the actual frame of the display.

It should also be noted that even though the earphone 202 shown as being arranged on this frame 203a can also be mounted on a side or on the backside of the device thus allowing more of the front side of the device 200 to be used to increase the available screen size.

In this embodiment the display is a touch screen with a set of virtual keys 204. Other keys such as physical soft keys or keys adapted to special functions such as camera buttons, volume keys etc are also arranged on the mobile phone in one embodiment (not shown).

In one embodiment one or more frame portions are arranged adjacent the display 203. This allows for non-flexible components 205 to be mounted while still allowing most of the device to be bent. See fig 2B for an example.

The internal component, software and protocol structure of the mobile terminal 200 will now be described with reference to FIG. 3. The mobile terminal has a controller 300 which is responsible for the overall operation of the mobile terminal and may be implemented by any commercially available CPU ("Central Processing Unit"), DSP ("Digital Signal Processor") or any other electronic programmable logic device. The controller 300 has associated electronic memory 302 such as Random Access Memory (RAM) memory, Read Only memory (ROM) memory, Electrically Erasable Programmable Read-Only Memory (EEPROM) memory, flash memory, or any combination thereof. The memory 302 is used for various purposes by the controller 300, one of them being for storing data used by and program instructions for various software in the mobile terminal. The software includes a real-time operating system 320, drivers for a man-machine interface (MMI) 334, an application handler 332 as well as various applications. The applications can include a message text editor 350, a notepad application 360, as well as various other applications 370, such as applications for voice calling, video calling, sending and receiving Short Message Service (SMS) messages, Multimedia Message Service (MMS) messages or email, web browsing, an instant messaging application, a phone book application, a calendar application, a control panel application, a camera application, one or more video games, a notepad application, etc. It should be noted that two or more of the applications listed above may be executed as the same application

The MMI 334 also includes one or more hardware controllers, which together with the MMI drivers cooperate with the first display 336/203, and the keypad 338/204 as well as various other Input/Output devices such as microphone, speaker, vibrator, ringtone generator, LED indicator, etc. As is commonly known, the user may operate the mobile terminal through the man-machine interface thus formed.

The software also includes various modules, protocol stacks, drivers, etc., which are commonly designated as 330 and which provide communication services (such as transport, network and connectivity) for an RF interface 306, and optionally a Bluetooth interface 308 and/or an IrDA interface 310 for local connectivity. The RF interface 306 comprises an internal or external antenna as well as appropriate radio circuitry for establishing and maintaining a wireless link to a base station (e.g. the link 102 and base station 104 in FIG. 1). As is well known to a man skilled in the art, the radio circuitry comprises a series of analogue and digital electronic components, together forming a radio receiver and transmitter. These components include, band pass filters, amplifiers, mixers, local oscillators, low pass filters, Analog to Digital and Digital to Analog (AD/DA) converters, etc.

The mobile terminal also has a Subscriber Identity Module (SIM) card 304 and an associated reader. As is commonly known, the SIM card 304 comprises a processor as well as local work and data memory.

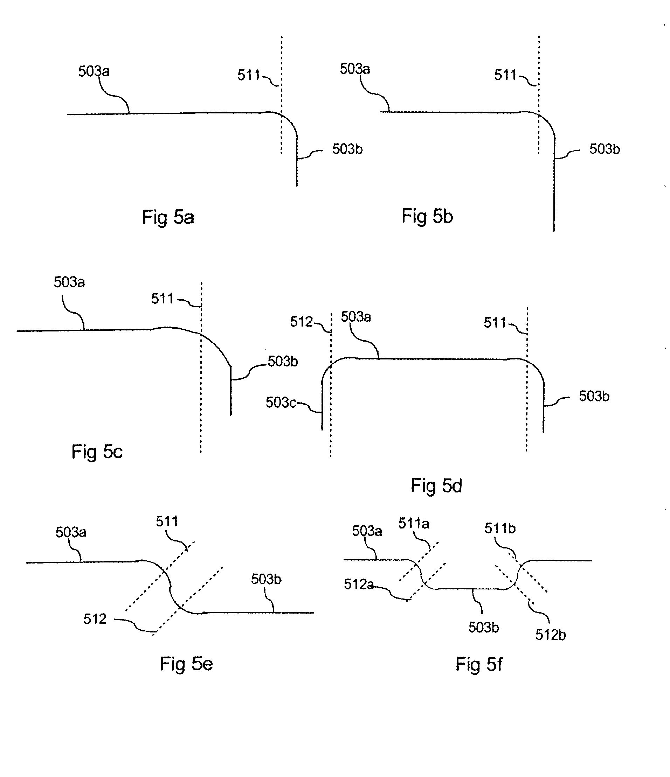

A user interface according to the teachings herein is arranged to detect two basic folds or bends, a single bend or a double bend. Also a combination of single bends, a combination of double bends and a combination of single and double bends are possible. The single bends can be differentiated on a number of criteria such as the direction (up or down), angle or sharpness, the speed of bending, the force of bending, the position of the bend or fold and the position of a user's fingers when the device is bent. The double bends can be differentiated on the same criteria as the single bends and also distance between bends or foldlines and direction of bend. See the description of figure 5 for a more detailed discussion on the various bends or folds.

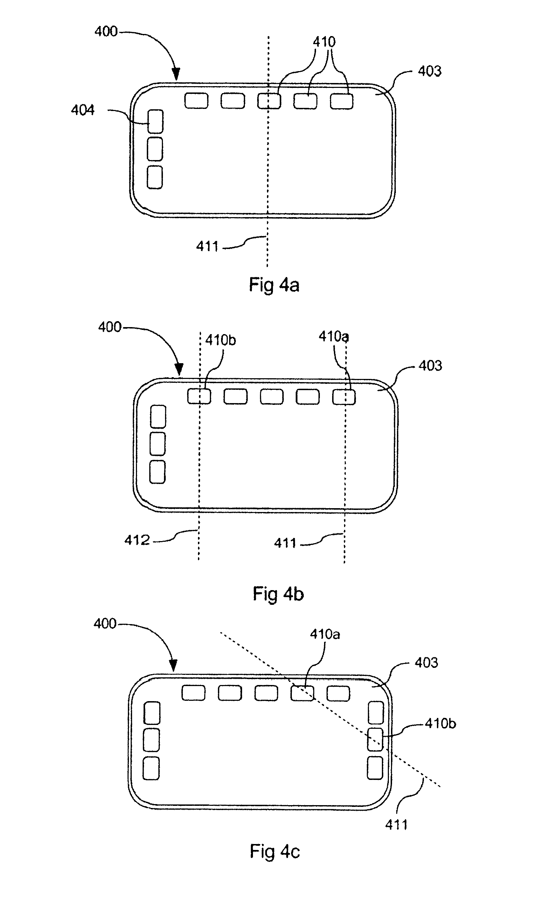

Figure 4a shows a device 400, which in this example is a mobile phone 400 according to figure 2 and 3. The mobile phone has a display 403 that is flexible. In this embodiment the whole display is flexible. Arranged on the display are virtual keys 404 and graphical objects, such as icons, 410. These graphical objects are associated with a file or an application. The graphical objects are also associated with one or more functions.

In one embodiment the graphical objects 410 comprise the keys 404.

Figure 4a also shows a foldline 411 along which the mobile phone 400 is bent. In this example the foldline 411 is positioned so that it intersects a graphical object 410.

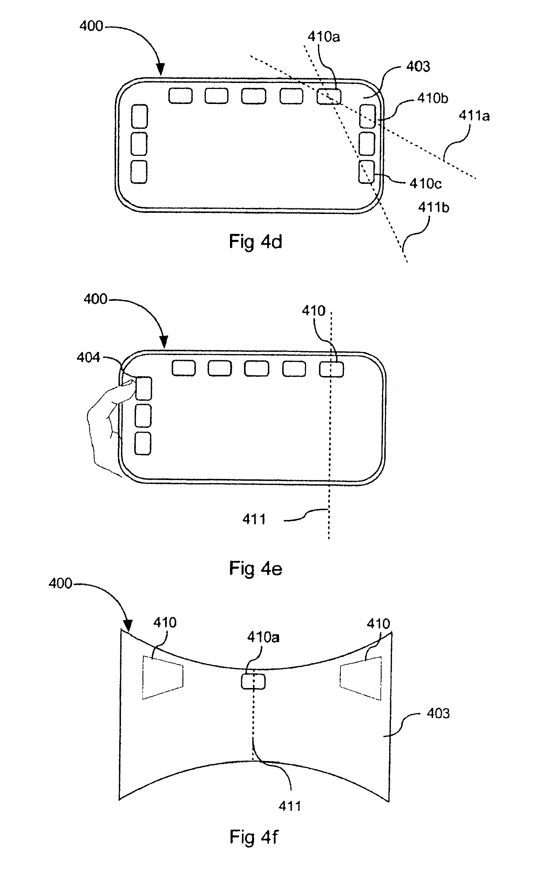

In one embodiment a visual representation of the foldline 411 is displayed graphically on the display 403, see fig 4f.

In one embodiment the visual representation of the foldline 411 is frozen on the display 403 as a select action is executed or performed to indicate to a user which graphical object 410 has been selected. The foldline remains frozen until an associated action or function has been executed.

In one embodiment the intersected graphical object is highlighted on the display 403.

The controller (not shown) of the mobile phone 400 is configured to detect the bending action and determine which graphical object 410 is intersected by the foldline 411. The controller is also configured to execute a function associated with said graphical object.

In one embodiment this function or action is executed as a bend event is detected. A bend event is triggered as the mobile phone 400 is bent.

In one embodiment this function or action is executed as a release event is detected. A release event is triggered as the mobile phone 400 is released after having been bent.

In one embodiment the angle or sharpness of the bend determines which out of a plurality of associated functions is to be executed.

In one embodiment the speed of the bend and/or the release determines which out of a plurality of associated functions is to be executed.

In one embodiment a sequence of bends along the same foldline 411 determines which out of a plurality of associated functions is to be executed. This is similar to a double click in a traditional user interface having a mouse or other pointing means. It should be noted that it is possible to also have a sequence of 1, 2, 3, 4 or any number of bends. The number of bends could be used to step through a list of the associated function to determine which function is to be executed. In one embodiment such a list is displayed on the display 403.

In one embodiment the position of a user's fingers on the up-down direction could define the function to be executed when the display 403 is bent. In another embodiment a plurality of graphical objects 410 are located along or intersected by the same foldline 411 and a user selects the graphical object 410 to be selected by placing a finger on that graphical object.

In another embodiment a first plurality of items are selected using one bend creating a foldline 410 intersecting a number of graphical objects 410 (left-right direction). The wanted item is then selected by making a second bend (top-down direction) creating a foldline 411 intersecting the wanted graphical object 410 among those selected by the first bend.

In one embodiment an associated function is to open or expand an item having been selected. In this embodiment a first foldline 411 is used to select a graphical object 410 which is opened or expanded to display further graphical objects 410 for a user to select between with a second bend action.

Figure 4b shows a mobile phone 400 much as in figure 4a with the difference that the mobile phone 400 of figure 4b has been bent in two places indicated by the dashed lines of two foldlines 41 and 412. The first foldline 411 intersects a first graphical object 410a and the second foldline 412 intersects a second graphical object 410b. The controller (not shown) is configured to determine an associated function and execute this on the selected graphical objects 410.

In one embodiment the first graphical object 10a is associated with an application or a device function. Examples of such applications or device functions are initiate call and open.

In one embodiment the second graphical object is associated with a file or data entry, such as a media file or a contact.

Examples of combinations of first and second graphical objects and the associated functions are shown in table 1. It should be noted that in one embodiment the order of the bends and associated foldlines 411 and 412 is not decisive to the associated function. For example it does not matter in which order a file and the device function PRINT is selected the resulting action will be to print the file. In an alternative embodiment the order is decisive for determining the associated function. For example if a graphical object 410a associated with a text document A is selected before a graphical object 410b associated with another text document B the associated function is to append A to B resulting in BA. If the text documents are chosen in the opposite order the associated function is to append B to A resulting in AB.

It should be noted that even though the foldlines 411 and 412 described above have been shown as being directed from top to bottom the may also be directed from side to side, i.e. from left to right or right to left.

It should also be noted that a differentiating criterion can be which direction a foldline is created or in other words to differentiate between whether a fold or bend is initiated in the top and ended in the bottom or initiated in the bottom and terminated in the top. An example can be where a graphical object 410 associated with a file is intersected by a foldline 411 that starts from the bottom up. Such a movement is indicative of a bringing up movement and the associated function is to open the file. Whereas when a graphical object 410 associated with a file is intersected by a foldline 411 that starts from the top to the bottom. Such a movement is indicative of a pushing down movement and the associated function is to delete the file.

Figure 4C shows a device 400, such as in previous figures, that is bent along a foldline that is not directed from top to bottom (or bottom to top) but from top to side. Such a bend allows one bend to select two graphical objects 410a and 410b with a single bend. This allows a user to select two graphical objects by bending a corner of the device.

In one embodiment a foldline 411 as in figure 4c can be used to allow a user to select a single graphical object where there are many graphical objects lying in a straight line thus not possible to select with one vertical or horizontal foldline 411.

It should be noted that even though figure 4c shows the graphical objects 410a and 410b arranged on different sides a selection of two graphical objects 410a and 410b can be achieved also with a foldline going top to bottom if either the two graphical objects are arranged on top of each other relative the foldline direction or if the foldline direction is at an angle.

Figure 4d shows the device 400 of figure 4c where a first graphical object 410a and a second graphical object 410b have been selected through a bend along a foldline 411a. As the graphical object has been selected the bend is changed to a different position resulting in a second foldline 410b intersecting and selecting a third graphical object 410c.

One example of graphical objects and associated functions is the first graphical object 410a being a media player application and the second and third graphical object 410b and c being media files resulting in the associated function to play both media files.

Another example of graphical objects and associated functions is the first graphical object 410a being a voice call application or device function and the second and third graphical object 410b and c being contacts resulting in the associated function to initiate a group call with the two contacts.

Another example of graphical objects and associated functions is the first graphical object 410a being a COPY device function and the second graphical object 410b being a file and the third graphical object 410 c being a folder resulting in the associated function to copy the file to the folder.

In one embodiment the display 403 is a touch screen and virtual keys 404 are displayed on the display 403. Each virtual key 404 has an associated function. As in prior art solutions for touch screens an associated function is executed as a virtual key 404 is pressed. In one embodiment a virtual key 404 is a graphical object 410. Figure 4e shows an embodiment where a virtual key is pressed by a user's finger while a bend a long a foldline 411 intersects and selects a graphical object 410. This allows for a combination of two objects and their associated functions i.e. the virtual key 404 and the graphical object 410. The resulting associated function of a graphical object 410 is in one embodiment dependant on whether a graphical object 410 is selected by being intersected by a foldline 410 or pressed as a virtual key 404.

Figure 4f shows an embodiment of a mobile phone 400 having a display 403 on which graphical objects 410 are displayed. One graphical object 410a is intersected by a foldline which is visually represented on the display 403 by a dashed line 411.

In one embodiment the visual representation of the foldline 411 is frozen on the display 403 as a select action is executed or performed to indicate to a user which graphical object 410 has been selected. The foldline remains frozen until an associated action or function has been executed. If further bends are detected or if the bend is changed further foldlines are visually represented by further dashed lines (not shown).

In one embodiment a user can initiate a page up-function or a page down-function (or a next or previous function) by bending the display around its middle (marked by foldline 411 in figure 4a). This represents turning a page and provides the user of an intuitive way of scrolling to a next item, sheet or page being displayed on the display 403. To scroll or turn in the opposite direction the display is simply bent in the opposite direction. These bending motions are highly similar to the movements made by a user while reading a magazine that is held in front of him.

As has been stated above there are a number of basic bends. Figure 5 shows some of these bends and the criteria that differentiate the bends from one another.

It should be noted that the foldlines 511 and 512 in figure 5 are indicated with dashed lines and that the directions of the dashed lines do not indicate the direction of the foldlines 511 and 512, merely their locations and are rather indicating the direction of the bends.

Figure 5a shows a display 503 having a first and a second portion 503a and 503b respectively. The display 503 is shown as being bent between the two portions along a foldline 511. In figure 5b the same display 503 is shown as being bent along a foldline 511 that is located at a different place on the display 503 which is indicated by the lengths of the portions 503a and 503b being unequal in relation between the two figures.

Figure 5c shows the same display 503 which is also bent along a foldline 511. However, compared to figures 5a and 5b the bend in this figure is not as steep indicating that the angle of the bend, and not only its position, can differentiate between two bends.

In one embodiment the differentiating criterion is taken to be the angle between the portions 503a and 503b of the display 503 and not as in the previous embodiment the sharpness of the angle, but the resulting angle between the portions 503a and 503b. Thus by bending the display 503 to a greater extent a different function can be executed or performed. This could be utilized in a similar manner to how the double click or also the longpress functionality is utilized in traditional graphical user interfaces. In one embodiment the degree of the bending angle indicates a volume setting. In one embodiment the degree of the bending angle indicates a display brightness.

Figure 5d shows a display 503 which is bent in two places along two foldlines 511 and 512 respectively. Both of these bends are in the direction up assuming that the foldlines 511 and 512 are from top to bottom or side to side. Figure 5e shows another variant of a double bend where a display has been bent twice but where the bending directions differ. As can be seen this constitutes an entirely different bending. In one embodiment the double direction double bend of figure 5e is utilized to provide input for a dialogue box displayed on the screen (not shown). A dialogue box most usually provides a user with two options "OK" or "Cancel". These options are indicated with graphical labels or text displayed in the dialogue box. By bending the device so that one of the options of the dialogue box is brought forwards that option is selected. In one embodiment the option is selected by bending the display so that the option is moved backwards relative the plane of the display.

In one embodiment a dialogue box offers more than two options and an option is selected by bringing that option forwards (or backwards depending on implementation or user choice). This may necessitate two double direction double bends, see figure 5f. For example, should a dialogue box be displayed providing the three options, listed in order being displayed, "Save", "Open" and "Cancel" a user could select the middle option "Open" by bending the display so that the option "Open" is brought forwards.

The bends can also be differentiated depending on between which sides the foldline is laid. Possible directions are from top to bottom, from side to side, from top to side or from bottom to side.

The direction in this aspect is different from the direction of the bend itself. From now on the direction of the bend will be understood to be the direction in which the display 403 is bent and will only have the directions up or down. The direction of the foldline is the direction of a line along which the display is bent and will have the directions top to bottom, side to side, top to side and side to bottom. These directions being taken in relation to the front face of the display 403.

It is also possible to vary a bend as has been shown in figure 4d.

In an embodiment where a bend may continuously change or vary the definition of the functionality associated with the bend and release events described in relation to figure 4 will be described below.

If a bend event is associated with the action select, the following varying of the bend may result in a moving action. In this context a moving action is understood to be an action of moving the graphical object.

In an alternative embodiment a time out is active for a bend and if a bend is kept substantially constant for a predetermined time equaling the time out a time out function is executed. In this embodiment several graphical objects can be selected by moving a foldline and keeping it steady over each graphical object for the pre-specified time out period.

In an alternative embodiment the release event is also defined to be select which would allow a user more precision to steer the foldline before making a selection.

If a bend is initiated with a foldline intersecting one graphical object and terminated with a foldline intersecting another graphical object these two objects are to be combined in a manner as defined by their associated functions as has been described above with reference to figure 4d.

The associated definition of the functions for the bend and release events can be associated with the graphical actions or the sides of the display 503 or other areas of the display 503 where the bend is initiated and/or terminated.

It is not only the position of the foldline that is decisive for which action is to be taken. The resulting shape of the device can also be used to determine which action is to be taken or which function should be executed.

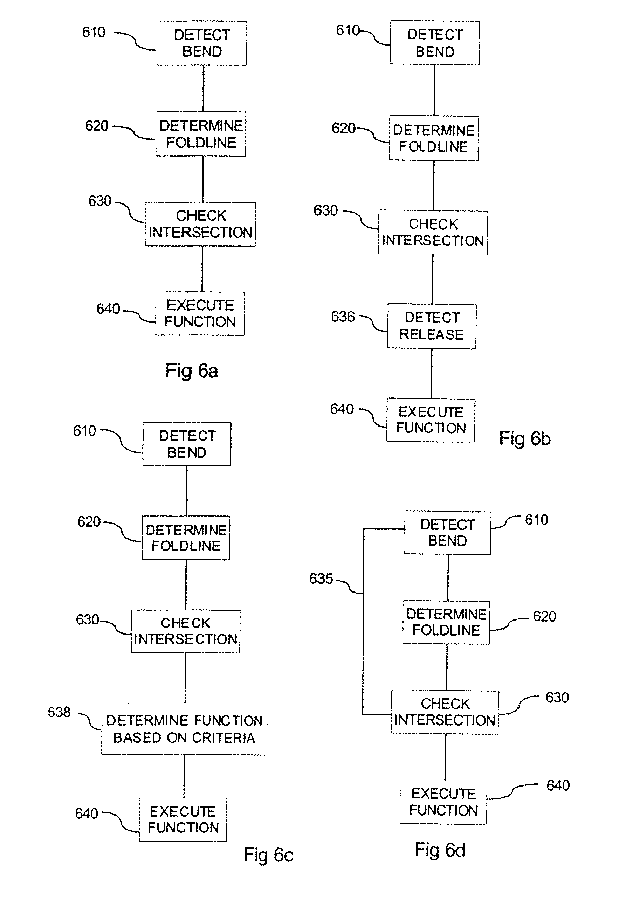

Figure 6a shows a flowchart of an embodiment. In a first step 610 a bend is detected and a foldline is determined in a second step 620 and checked in a third step 630 to see if any graphical objects are intersected by the foldline. If so, such graphical objects are selected and an associated function is executed in a last step 640.

It should be noted that the foldline may be varied before an intersection is finally determined.

Figure 6b shows an alternative where a release event is detected in a step 636 which event is the triggering event for performing an associated function. By using the release event as a triggering event a user is able to more accurately select a desired graphical object as the bend can be varied to select a different graphical object before executing an associated function.

Figure 6c shows an alternative where the associated function is selected among a plurality of available functions depending on a bending criteria, such as for example a detected direction, a detected angle and a detected bending speed, as has been discussed above with reference to figures 4 and 5. The criteria also include the dependencies between one or more graphical objects selected.

Figure 6d shows an alternative where further bends are detected to select further graphical objects through a transition 635 from step 630 to step 610.

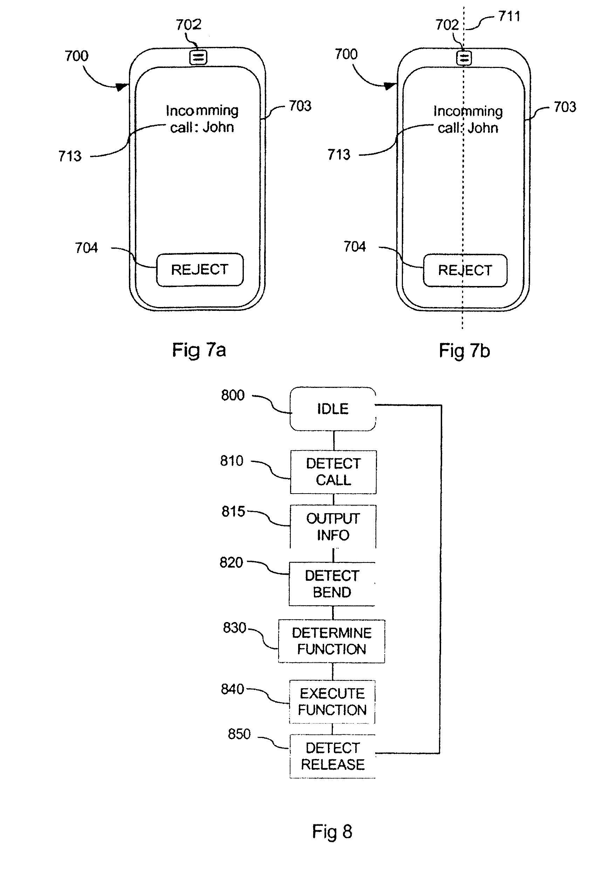

Figure 7a shows an example of the teachings here in can be utilized in a mobile phone 700 according to an embodiment. The mobile phone 700 has an earphone 702 and a display 703. A virtual key 704 is displayed on the display 703 along with an output in the form of a visual notification 713 stating that an incoming call is waiting. In this example the call is from a contact named John. The notification may be accompanied by a different output such as sound or vibration.

A controller (not shown) is configured to determine if a bend is detected and if so check if a graphical object (704) is intersected by a foldline. In this example a bend is detected along a foldline 711 intersecting the virtual key 704 being a graphical object, see figure 7b. The associated function with the graphical object 704 and associated with a bend is to answer the call and this function is thus executed. A user can thus answer an incoming call simply by rolling the phone 700 or bending it into a position where it rests in a hand. This is an action that is highly intuitive to use.

This is an example of where a graphical object's associated function is different depending on whether it is selected by a keypress or by being intersected by a foldline. In this example the virtual key 704 is displayed with a label saying "REJECT" indicating that the associated function would be to reject the incoming call. This is however the associated function with the event of pressing the touchdisplay in the area occupied by the graphical object. Not the function associated with a bending event.

Bending the phone from top to bottom in this manner to accept a call has an additional advantage in that the phone 700 itself acts as a shield for the earphone 702 and a microphone (not shown) thus shielding the environment from the sound from the earphone and shielding the microphone from surrounding noise.

Alternatively the call can be accepted by rolling the phone or bending it as a phone so that the earphone 702 and the microphone are placed in proximity to a user's ear and mouth possible being in substantially the same plane. This has the advantage that the earphone and microphone is arranged close to the user's ear and mouth which reduces the noise level in the forthcoming conversation. The bend in this embodiment would be along a foldline going from side to side.

In an alternative embodiment a bend in the opposite direction is associated with the function REJECT so that a user can eject the call by banding the phone in the opposite direction.

In one embodiment the user interface is configured to answer an incoming call by detecting a first bend which is associated with a function of unlocking the call functionality and then to detect a second action to accept the call. In this embodiment an incoming call is answered by a user by first bending the device a bit to unlock it and then for example pressing an answer button to answer the incoming call. This way user can avoid answering calls accidentally as a device might bend accidentally in a user's pocket and answer the call.

In one embodiment such an unlocking functionality is coupled with a position of a finger. For example, a delete function is good example of a function that should not be executed accidentally. Deleting an item on display would be performed by selecting a corresponding graphical object using a foldline and then tapping a delete button simultaneously with a finger.

Figure 8 shows a flowchart of an embodiment of accepting an incoming call. A phone is in an idle state in a step 800 when it detects an incoming call in a step 810. Information about the incoming call, be it visual, audible or tactile, is output in an optional step 615. The controller then detects a bend in step 820 and determines an associated function in step 830. The function is then executed in step 840. In the example above the incoming call has been answered. As an alternative the controller keeps on executing the associated function until a release event is detected in a step 850 upon which the phone returns to the idle state 800. In the example above the cal is thus ongoing as long as the phone is kept bent and the call is ended as the phone is released signifying the action to hang up.

It should be noted that in one embodiment the shape of the bend is associated with a function in itself.

In the prior art it is known to pair two devices, possibly through a Bluetooth™ connection or a Wireless Fidelity, WiFi, connection. The action of paring the two devices often requires that a menu structure is accessed to find the correct option to pair and then that some form of identification and also validation is communicated between both the devices and the users.

In one embodiment the pairing of two devices can be achieved by a pre-specified bend that is associated with the function of finding other devices looking for a pairing partner. The pre-specified bend can also be dependant on a graphical object that is associated with the pairing function so that the pairing function is executed as the pre-specified bend creates a foldline (possibly one of a plurality) that intersects the associated graphical object.

The shape of the bend acts either of or both as a means to identify and also to validate a device. In one embodiment an 'S'-shape indicates that the device should be paired with a device belonging to a (pre-specified) user named "Susanna". In one embodiment the 'S'-shape is used to validate the connection between two devices by bending the device into an 'S', the 'S' signifying "Secure".

It should be noted that these are just examples of shapes and associated functions and should not be construed as limiting and that other possibilities and variations are also included in the teachings herein.

In one embodiment the shape is predetermined and associated with the pairing function where the shape is a default shape.

In one embodiment the shape is varied to allow the device to search for a pairing device having the same shape.

In one embodiment the shape is indicative of a validation where the two devices need to assume the correct bending shape for the connection to be validated.

It should be noted that while two devices are paired a bending action of one device may control the other device.

In one embodiment the series of bends and assumed shapes is used to trigger the associated functionality of paring with a device or to identify or validate a device.

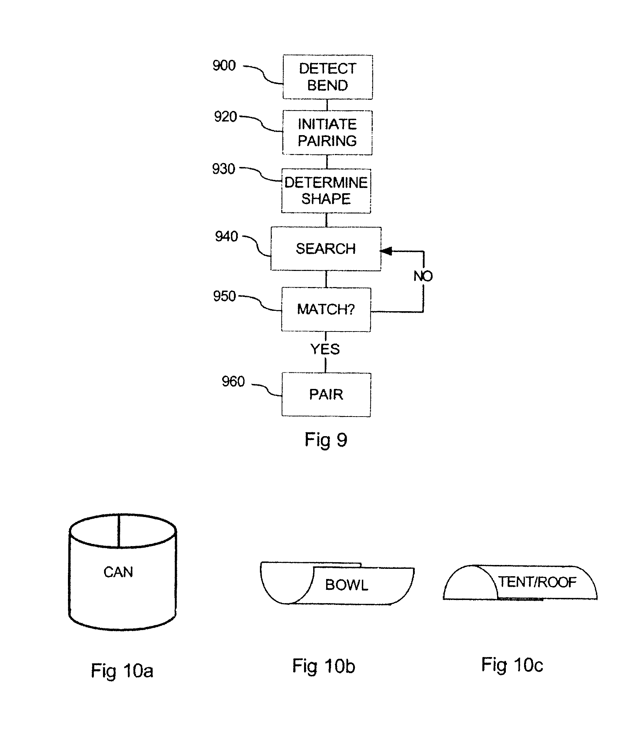

Figure 9 shows a flowchart of a method incorporating such a pairing method in a device such as has been described above. In a first step 900 a bend is detected and in a second step 920 the pairing is initiated. The shape of the bend is determined in a step 930 and a search for matching pairing devices is initiated in a step 940. If a match is found in step 950 the two devices are paired. If not the search continues in step 940. The matching can be based on a specific shape that needs to be matched by the other device or by the device assuming a default position. The default position may be different from device to device and from previously connected devices to indicate which device should be paired. For example an 'S'-shape may indicate to pair with a device belonging to Sara and an 'L'-shape may indicate to pair with a device belonging to Larry.

In one embodiment the device is arranged to find a point of interest as an associated function. By associating a specific shape with an institution such as a restaurant, a department, an activity or other a search for the associated institution can be initiated as a bend and the associated shape is detected. The shapes can be defined to imitate everyday item making the feature easy to remember and to use. Figure 10 shows an array of various forms and their respective meaning and table 2 lists the associated institutions.

In one embodiment the pre-specified shape is also associated with a movement. The device is arranged with a movement detector such as an accelerometer or a gyroscope or other well-known motion detector. As a pre-specified shape is detected and followed by the detection of a pre-specified movement an associated function is executed. This provides for further possibilities of uniquely identifying a function using real life similarities. For example folding the device into a can-like shape and raising it can execute the function of finding a place to drink beer while folding the device into a can-like or handle-like shape and swinging it will execute the function of finding a place to play sports such as tennis or squash.

Another example is to fold the device into a phone-like shape and raising it to ones ear which will execute an answering incoming call function.

Figure 10a shows a device having been bent to resemble a can, possibly used to hold beer or soda. The associated institution is according to table 2 a bar or a pub. A search will thus be performed for a bar or a pub either a specific franchise or any bar or pub in the neighborhood.

Figure 10b shows a device having been bent to resemble a bowl. The associated institution is according to table 2 a restaurant. A search will thus be performed for a restaurant either a specific franchise or any restaurant in the neighborhood.

Figure 10c shows a device having been bent to resemble a roof or a tent. The associated institution is according to table 2 a hotel or motel. A search will thus be performed for a hotel, motel or guest house either a specific franchise or any hotel, motel or guesthouse in the neighborhood.

In one embodiment the resembled form can be more closely associated with a franchise or trademark. For example bending the device into an M-shape may initiate a search for the closes McDonald's™ restaurant and bending the device into a C-shape may initiate a search for the closest vending machine offering Coca cola™ drinks.

In one embodiment the feature of searching for an institution can be associated to a graphical object where the shape then determines which institution is to be searched for.

In one embodiment other shortcuts are associated with a pre-specified gesture or bending pattern so that as that pattern or gesture is recognized the associated short cut is executed.

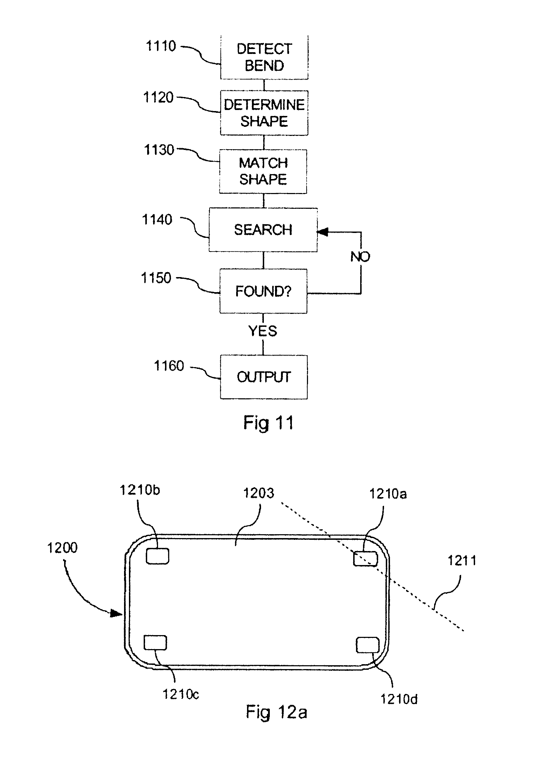

Figure 11 shows a flowchart of an embodiment. A bend is detected in a step 1110 and a shape is determined in a step 1120. The shape is matched for resembling objects and associated institutions or brands in step 1130 identifying an institution to search for. In an alternative solution an intersection with a specific graphical object either indicating a search or an institution to search for is detected in a sub-step to either of the steps 1130 or 1120. In a step 1140 a search is conducted for the identified institution. As an institution is found in step 1150 it is output to a user in step 1160.

As an alternative if no institution is found in step 1150 a broader search criterion is used to initiate another search by returning to step 1140. For example if a search is conducted for the institution of an establishment of a specific franchise, say McDonalds™ is conducted and no McDonald's™ is found a broader search looking for any fast food restaurant may be conducted. If this also fails an even broader search looking for any restaurant may be conducted.

In general it should be noted that a combination of the shape of the device, the movement of the device and the current state of the device's user interface and what is displayed on the display is used to determine what function should be executed.

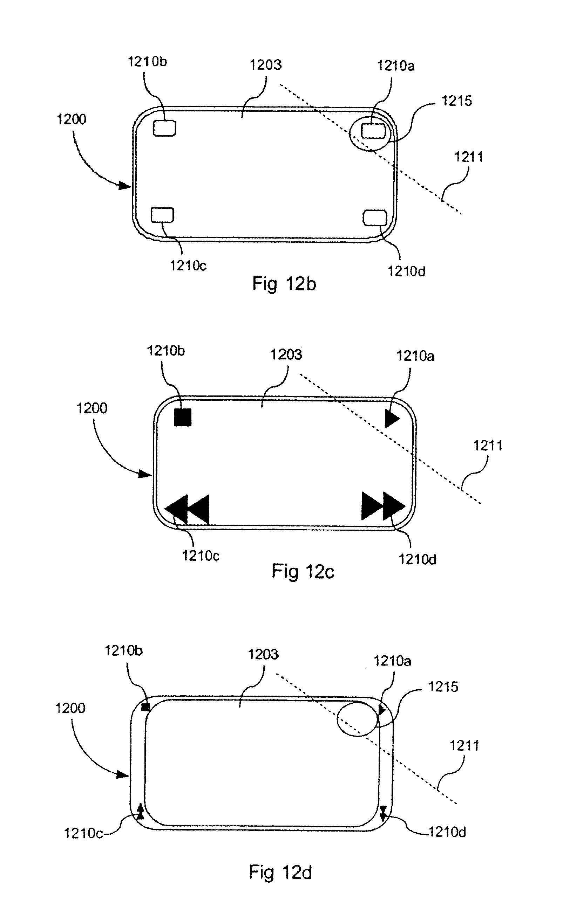

Figure 12 shows an embodiment of a device 1200. In this embodiment each corner is associated with a function. This function may be predetermined or it may vary such as the function of a softkey. By bending a corner the associated function is executed. Figure 12a shows a device 1200 where a graphical object 1210 is displayed in each corner of a display 1203. In one embodiment the graphical objects 1210 display information informing a user of the associated function. This information may be a symbol or a text label. As a corner is bent a foldline 1211 is detected as intersecting a graphical object 1210a and the function associated with this graphical object 1210a is executed.

In one embodiment the graphical objects 1210 have an intersecting area 1215 that is larger than the actual graphical object 1210 and any foldline 1211 intersecting this intersecting area 1215 is determined to have intersected the corresponding graphical object 1210. See figure 12b.

In one embodiment, see figure 12c, the functions associated with each corner is fixed for an application. In figure 12b the graphical objects resembling a PLAY function 1210a, a STOP function 1210b, a SKIP BACK function 1210c and a SKIP function 1210d are displayed on the display 1203. In this embodiment a bend of a corner will execute the function associated with that corner.

In this embodiment a corner bend is identified by the direction of the foldline 1211, not necessarily which graphical objects 1210 are intersected.

In one embodiment the graphical objects 1210 are not displayed on the display 1203, but outside the display 1203 printed or engraved or otherwise displayed on the device 1200, see figure 12d.

In one embodiment the graphical objects 1210 have enlarged intersecting areas 1215 that extend onto the display.

The various aspects of what is described above can be used alone or in various combinations. The teaching of this application may be implemented by a combination of hardware and software, but can also be implemented in hardware or software. The teaching of this application can also be embodied as computer readable code on a computer readable medium. It should be noted that the teaching of this application is not limited to the use in mobile communication terminals such as mobile phones, but can be equally well applied in Personal digital Assistants (PDAs), game consoles, MP3 players, personal organizers or any other device designed for providing an advanced user interface allowing access to a variety of functions and/or applications.

The teaching of the present application has numerous advantages. Different embodiments or implementations may yield one or more of the following advantages. It should be noted that this is not an exhaustive list and there may be other advantages which are not described herein. For example, one advantage of the teaching of this application is a user interface offering a multitude of possibilities for executing functions in an intuitive manner without requiring extra screen space or additional keys.

Although the teaching of the present application has been described in detail for purpose of illustration, it is understood that such detail is solely for that purpose, and variations can be made therein by those skilled in the art without departing from the scope of the teaching of this application.

For example, although the teaching of the present application has been described in terms of a mobile phone, it should be appreciated that the teachings of the present application may also be applied to other types of electronic devices, such as music players, palmtop computers and the like. It should also be noted that there are many alternative ways of implementing the methods and apparatuses of the teachings of the present application.

Features described in the preceding description may be used in combinations other than the combinations explicitly described.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

The term "comprising" as used in the claims does not exclude other elements or steps. The term "a" or "an" as used in the claims does not exclude a plurality. A unit or other means may fulfill the functions of several units or means recited in the claims.

### Tables

**Table 1. Combinations of first and second graphical objects and resulting associated function. Device functions and applications are written in capitals.**

| First object | Second object | Associated function |
|---|---|---|
| CALL | Contact(John) | Call John |
| OPEN | Text document | Open text document in a text editor |
| PRINT | Image file | Print the image file on a connected printer |
| Text document | Text document | Append text documents |
| OPEN | Media file | Play the media file |
| Contact(John) | TEXT EDITOR | Edit contact |
| TEXT EDITOR | Contact(John) | Add text note to contact |
| [More examples?] | | |

**Table 2. Resembled forms and associated institutions.**

| Form resembled | Associated institution |
|---|---|
| CAN | Bar, pub or other establishment where a drink can be had. |
| BOWL | Restaurant or other establishment where food can be purchased possibly being a specific franchise such as McDonalds™. |
| TENT/ROOF | Hotel, motel, campsite, guesthouse, bed and breakfast possibly being a specific franchise such as Radisson™ or Hilton™. |

The following numbered paragraphs are also disclosed.
1. A user interface comprising a flexible display and a controller configured to:
   - detect a first bend and determine a resulting first foldline,
   - determine a graphical object being intersected by said first foldline and
   - execute a function associated with said graphical object.
2. A user interface according to paragraph 1, wherein said controller is further configured to:
   - detect a second bend and determine a resulting second foldline,
   - determine a second graphical object being intersected by said second foldline and wherein said function is associated with or performed on said second graphical object.
3. A user interface according to paragraph 1, wherein said controller is further configured to determine a second graphical object being intersected by said first foldline and wherein said function is associated with or executed on said second graphical object.
4. A user interface according to paragraph 1, wherein said controller is further configured to detect a variation in said first bend and determine a resulting second foldline and determine a second graphical object being intersected by said second foldline and wherein said function is associated with or executed on said second graphical object.
5. A user interface according to paragraph 4, wherein said controller is further configured to detect a third graphical object being intersected by said first foldline and wherein said function is associated with or executed on said third graphical object.
6. A user interface according to paragraph 1, wherein said display is a touchdisplay and said controller is further configured to detect a touch input identifying a graphical object on said display wherein said function is associated with or executed on said second graphical object.
7. A user interface according to paragraph 1, wherein said display is configured to display a graphical indication of a foldline.
8. A user interface according to paragraph 1, wherein said controller is further configured to detect a double bend.
9. A user interface according to paragraph 1, wherein said controller is further configured to detect a release event and execute said function upon detection of said release event.
10. A user interface according to paragraph 1, wherein said controller is further configured to detect a characteristic of said bend and determine said associated function according to said a criterion based on said characteristic.
11. A user interface according to paragraph 10, wherein said criterion is related to one characteristic taken from the group comprising: position of bend, angle of bend, speed of bend, sharpness of bend.
12. A user interface according to paragraph 1, wherein said controller is further configured to determine that a graphical objected is intersected if a foldline intersects an area surrounding said graphical object.
13. A user interface according to paragraph 1, wherein said display is configured to display a graphical object.
14. A user interface comprising a flexible display and a controller configured to detect a bend resulting in a shape and execute a function associated with said shape.
15. A user interface according to paragraph 14, wherein said controller is further configured to detect a movement and execute a function associated with said movement.
16. A user interface according to paragraph 14, wherein said function is to search for an institution.
17. A user interface according to paragraph 14, wherein said function is to establish a connection with a device.
18. A user interface comprising a flexible display and a controller configured to detect a bend of a corner of said display and execute a function associated with said corner.
19. A method for executing a function in a device comprising a flexible display, said method comprising:
   - detecting a bend,
   - determine a resulting foldline
   - determine a graphical object being intersected by said foldline and execute a function associated with said graphical object.
20. A method according to paragraph 19 further comprising detecting a release event and executing said function upon said release event.
21. A method according to paragraph 19 further comprising determine said function based on a criterion related to a characteristic of said bend.
22. A method according to paragraph 19 further comprising:
   - detecting a second bend,
   - determining a resulting second foldline,
   - determine a second graphical object being intersected by said second foldline and wherein said function is associated with or executed on said second graphical object.
23. A method according to paragraph 19 further comprising:
   determining a second graphical object being intersected by said first foldline and wherein said function is associated with or executed on said second graphical object.
24. A method according to paragraph 19 further comprising detecting a variation in said first bend and determining a resulting second foldline and determining a second graphical object being intersected by said second foldline and wherein said function is associated with or executed on said second graphical object.
25. A method according to paragraph 19 further comprising detecting a third graphical object being intersected by said first foldline and wherein said function is associated with or executed on said third graphical object.
26. A method according to paragraph 19 wherein said display is a touchdisplay and said method comprises detecting a touch input identifying a graphical object on said display wherein said function is associated with or executed on said second graphical object.
27. A method according to paragraph 19 further comprising displaying a graphical indication of a foldline.
28. A method according to paragraph 19 further comprising detecting a double bend.
29. A method according to paragraph 19 further comprising detecting a release event and executing said function upon detection of said release event.
30. A method according to paragraph 19, further comprising determining that a graphical objected is intersected if a foldline intersects an area surrounding said graphical object.
31. A method according to paragraph 19, further comprising displaying said graphical object on said display.
32. A method for executing a function in a device comprising a flexible display, said method comprising detecting a bend of a corner of said display and executing a function associated with said corner.
33. A method for executing a function in a device comprising a flexible device, said method comprising:
   - detecting a bend,
   - determining a resulting shape,
   - determining a function associated with said shape and executing said function.
34. A method according to paragraph 33, wherein said function is to search for an institution.
35. A method according to paragraph 33, wherein said function is to establish a connection with a device.
36. A method according to paragraph 33 further comprising detecting a movement wherein said function is associated with said movement.
37. A method according to paragraph 33 further comprising detecting a release event and thereupon arrest said execution of said function.
38. A computer readable medium including at least computer program code for controlling a user interface comprising a flexible display, said computer readable medium comprising:
   - software code configured to detect a first bend and determine a resulting first foldline,
   - software code configured to determine a graphical object being intersected by said first foldline and
   - software code configured to execute a function associated with said graphical object.
39. A computer readable medium as in paragraph 38 further comprising software code configured to
   - detect a second bend and determine a resulting second foldline,
   - determine a second graphical object being intersected by said second foldline and wherein said function is associated with or performed on said second graphical object.
40. A computer readable medium as in paragraph 38 further comprising software code configured to determine a second graphical object being intersected by said first foldline and wherein said function is associated with or executed on said second graphical object.
41. A computer readable medium as in paragraph 38 further comprising software code configured to detect a variation in said first bend and determine a resulting second foldline and determine a second graphical object being intersected by said second foldline and wherein said function is associated with or executed on said second graphical object.
42. A computer readable medium as in paragraph 38 further comprising software code configured to detect a third graphical object being intersected by said first foldline and wherein said function is associated with or executed on said third graphical object.
43. A computer readable medium as in paragraph 38 further comprising software code configured to wherein said display is a touchdisplay and said controller is further configured to detect a touch input identifying a graphical object on said display wherein said function is associated with or executed on said second graphical object.
44. A computer readable medium as in paragraph 38 further comprising software code configured to display a graphical indication of a foldline.
45. A computer readable medium as in paragraph 38 further comprising software code configured to detect a double bend.
46. A computer readable medium as in paragraph 38 further comprising software code configured to detect a release event and execute said function upon detection of said release event.
47. A computer readable medium as in paragraph 38 further comprising software code configured to detect a characteristic of said bend and determine said associated function according to said a criterion based on said characteristic.
48. A computer readable medium as in paragraph 47, wherein said criterion is related to one characteristic taken from the group comprising: position of bend, angle of bend, speed of bend, sharpness of bend.
49. A computer readable medium as in paragraph 38 further comprising software code configured to determine that a graphical objected is intersected if a foldline intersects an area surrounding said graphical object.
50. A computer readable medium as in paragraph 38 further comprising software code configured to display said graphical object on said display.
51. A computer readable medium including at least computer program code for controlling a user interface comprising a flexible display, said computer readable medium comprising software code configured to detect a bend resulting in a shape and execute a function associated with said shape.
52. A computer readable medium as in paragraph 51 further comprising software code configured to detect a movement and execute a function associated with said movement.
53. A computer readable medium including at least computer program code for controlling a user interface comprising a flexible display, said computer readable medium comprising software code configured to detect a bend of a corner of said display and execute a function associated with said corner.
54. A user interface comprising flexible display means and control means for:
   - detecting a first bend and determining a resulting first foldline,
   - determining a graphical object being intersected by said first foldline and
   - executing a function associated with said graphical object.
55. A user interface comprising flexible display means and control means for detecting a bend resulting in a shape and control means for executing a function associated with said shape.
56. A device incorporating or configured to incorporate a user interface according to paragraph 1.
57. A device implementing or configured to implement a method according to paragraph 19.
58. A device implementing or configured to implement a method according to paragraph 32.
59. A device implementing or configured to implement a method according to paragraph 33.

## Claims

1. An apparatus configured to:
detect one or more bends in a user interface comprising a flexible display;
determine a shape resulting from the one or more detected bends, the shape being a letter shape associated with the function; and
execute said function associated with the letter shape.

2. The apparatus of claim 1, wherein the apparatus is further configured to detect a movement and execute a function associated with said movement.

3. The apparatus of claim 1, wherein said function is to search for an institution or wherein said function is to establish a connection with a pairing device.

4. The apparatus according to claim 1, the apparatus being configured to detect a movement, said function being associated with said movement.

5. The apparatus according to claim 1, the apparatus being configured to detect a release event and thereupon arrest said execution of said function.

6. The apparatus according to claim 3, the apparatus being configured to enable the apparatus to search for a pairing device having the same shape as the determined shape.

7. The apparatus according to claim 3, the apparatus being configured to identify a pairing device based on the determined shape.

8. The apparatus according to claim 3, the apparatus being configured to validate a pairing device or a connection based on the determined shape.

9. The apparatus of claim 3, wherein the function is based on the determined shape of the user interface and the shape of the pairing device with which connection is established.

10. The apparatus of claim 1, wherein the apparatus forms part of a user interface, a cellular phone, mobile phone, an electronic device, a portable electronic device, a laptop, a PDA, a mobile communication terminal, an electronic book or a notepad, or the apparatus comprises: at least one processor; and at least one memory including computer program code.

11. A method for executing a function, the method comprising:
detecting one or more bends in a user interface comprising a flexible display;
determining a shape resulting from the one or more detected bends, the shape being a letter shape associated with the function; and
executing said function associated with the letter shape.

12. A computer readable medium including at least computer program code for controlling a user interface comprising a flexible display, said computer readable medium comprising software code configured to:
detect one or more bends in a user interface comprising a flexible display;
determine a shape resulting from the one or more detected bends, the shape being a letter shape associated with the function; and
execute said function associated with the letter shape.

13. An apparatus configured to:
detect one or more bends in a user interface comprising a flexible display;
determine a shape resulting from the one or more detected bends; and
execute said function associated with the shape, the function being searching for a location associated with the shape.

14. The apparatus of claim 13, wherein the apparatus is configured such that:
a can-like shape is associated with searching for a place to drink;
a can-like or handle-like shape is associated with searching for a place to play sports;
a bowl-like shape is associated with searching for a restaurant; or
a roof-like or tent-like shape is associated with searching for a hotel, motel or guesthouse.

15. An apparatus configured to:
detect one or more bends in a user interface comprising a flexible display;
determine a shape resulting from the one or more detected bends; and
execute said function associated with the shape, wherein a phone-like shape is associated with the function of answering a call.
